# EUROPEAN PATENT APPLICATION

(11) **EP 4 764 930 A1**
(43) Date of publication of application: **24.06.2026**
(21) Application number: 25209245.7
(22) Date of filing: 16.10.2025
(51) Int. Cl.: G06F 21/78, G06F 21/57, G06F 3/06, G06F 21/64

(54) **DATA ERASURE METHOD, INFORMATION PROCESSING SYSTEM, AND INFORMATION PROCESSING APPARATUS**

(30) Priority: 20.12.2024 JP 2024225506
(71) Applicant: Lenovo Japan LLC, Tokyo 101-0021 (JP)
(72) Inventor: OTSUKA, Masaki, Nishi-ku, 3-6-1-21F (JP); KASAMATSU, Eitaroh, Nishi-ku, 3-6-1-21F (JP); HAGIWARA, Mikio, Nishi-ku, 3-6-1-21F (JP); UDAGAWA, Hiroki, Nishi-ku, 3-6-1-21F (JP)
(74) Representative: Openshaw & Co.

(57) **Abstract**

The present invention is to securely erase data and guarantee reliability. A data erasure method includes: a first transmission step of causing a management server to transmit a data erasure program for a memory drive device to an information processing apparatus using cryptographic processing by a first private key; a step in which, when the data erasure program is validated using a first public key, the information processing apparatus installs the data erasure program on the memory drive device; a second transmission step of causing the management server to transmit an erase command to the information processing apparatus using cryptographic processing by the first private key to cause a processor of the memory drive device to run the data erasure program; and a step in which, when the erase command is validated using the first public key, the information processing apparatus transmits the erase command to the memory drive device to execute data erasure processing by the data erasure program.

## Description

### BACKGROUND OF THE INVENTION

### Field of the Invention

The present invention relates to a data erasure method, an information processing system, and an information processing apparatus.

### Description of the Related Art

In recent years, a technique for erasing data from an information processing apparatus such as a laptop personal computer (laptop PC) has been known (for example, see Japanese Unexamined Patent Application Publication No. 2020-119361). In the technique described in Japanese Unexamined Patent Application Publication No. 2020-119361, a memory drive device such as an SSD (Solid State Drive) has a function to automatically erase data completely to erase the data from an information processing apparatus using this function.

### SUMMARY OF THE INVENTION

However, in the conventional technology as described above, there has been a possibility that data may not be erased securely, for example, when the function to automatically erase data completely is tampered with, or the like. For example, when disposing of an information processing apparatus used by a company, it is required to ensure that data on a memory drive device built in the information processing apparatus is completely erased, and to guarantee reliability.

The present invention has been made to solve the above problem, and it is an object thereof to provide a data erasure method, an information processing system, and an information processing apparatus capable of erasing data securely in erasing data on a memory drive device and guaranteeing reliability.

In order to solve the above problem, the first aspect of the present invention is a data erasure method for an information processing apparatus equipped with a built-in memory drive device, the data erasure method including: a first transmission step of causing a management server that manages the information processing apparatus to transmit a data erasure program for the memory drive device to the information processing apparatus using cryptographic processing by a first private key as a private key of the management server; an installation step of causing the information processing apparatus to check the validity of the data erasure program using a first public key as a public key of the management server, and to install the validated data erasure program on the memory drive device when the data erasure program is validated; a second transmission step of causing the management server to transmit, to the information processing apparatus using cryptographic processing by the first private key, an erase command to cause a processor of the memory drive device to run the data erasure program; and a data erasure step of causing the information processing apparatus to check the validity of the erase command using the first public key, and to transmit, to the memory drive device, the validated erase command when the erase command is validated in order to execute data erasure processing by the data erasure program.

The data erasure method according to the above aspect of the present invention may further include: a third transmission step of causing the information processing apparatus to transmit a data erasure result as a result of the data erasure processing to the management server using cryptographic processing by a second private key as a private key of the information processing apparatus; and a result storage step of causing the management server to check the validity of the data erasure result using a second public key as a public key of the information processing apparatus, and to store, in an erasure result storage unit, the validated data erasure result when the data erasure result is validated.

The data erasure method according to the above aspect of the present invention may also be such that the information processing apparatus includes a sub control unit capable of operating independently of a main control unit which executes processing based on an OS (Operating System) and a BIOS (Basic Input Output System) and having a security area as a secure area directly inaccessible from the outside to store at least the first public key and the second private key, and in the installation step and the data erasure step, the sub control unit checks the validities of the data erasure program and the erase command, and the data erasure program and the erase command are transmitted to the memory drive device through the sub control unit and the BIOS.

The data erasure method according to the above aspect of the present invention may further be such that, in the third transmission step, the sub control unit transmits the data erasure result to the management server using cryptographic processing by the second private key.

Further, the data erasure method according to the above aspect of the present invention may be such that, in the first transmission step and the second transmission step, the management server generates signature information for transmission data using cryptographic processing by the first private key, adds the signature information to the transmission data for which the signature information is generated, and transmits the transmission data to the information processing apparatus, in the installation step and the data erasure step, the information processing apparatus checks the validities of the data erasure program and the erase command based on the signature information and the first public key, in the third transmission step, the information processing apparatus generates signature information on the data erasure result using cryptographic processing by the second private key, adds the signature information to the data erasure result, and transmits the data erasure result to the management server, and in the result storage step, the management server checks the validity of the data erasure result based on the signature information on the data erasure result and the second public key.

Further, the data erasure method according to the above aspect of the present invention may be such that the memory drive device is an SSD (Solid State Drive).

Further, the second aspect of the present invention is an information processing system including an information processing apparatus equipped with a built-in memory drive device, and a management server that manages the information processing apparatus, wherein the management server executes first transmission processing to transmit a data erasure program for the memory drive device to the information processing apparatus using cryptographic processing by a first private key as a private key of the management server, and second transmission processing to transmit, to the information processing apparatus using cryptographic processing by the first private key, an erase command to cause a processor of the memory drive device to run the data erasure program, and the information processing apparatus executes installation processing to check the validity of the data erasure program using a first public key as a public key of the management server, and to install the validated data erasure program on the memory drive device when the data erasure program is validated, and data erasure processing to check the validity of the erase command using the first public key, and to transmit, to the memory drive device, the validated erase command when the erase command is validated in order to execute the data erasure processing by the data erasure program.

Further, the third aspect of the present invention is an information processing apparatus in an information processing system including the information processing apparatus equipped with a built-in memory drive device, and a management server that manages the information processing apparatus, the information processing apparatus including: an installation processing unit which acquires a data erasure program for the memory drive device transmitted by the management server using cryptographic processing by a first private key as a private key of the management server, checks the validity of the data erasure program using a first public key as a public key of the management server, and installs the validated data erasure program on the memory drive device when the data erasure program is validated; and a data erasure processing unit which acquires an erase command transmitted by the management server using cryptographic processing by the first private key to cause a processor of the memory drive device to run the data erasure program, checks the validity of the erase command using the first public key, and transmits the validated erase command to the memory drive device when the erase command is validated to execute data erasure processing by the data erasure program.

The above aspects of the present invention can erase data securely in erasing data on a memory drive device and guarantee reliability.

### BRIEF DESCRIPTION OF THE DRAWINGS

FIG. 1 is a configuration diagram illustrating an example of an information processing system according to a first embodiment.
FIG. 2 is a block diagram illustrating an example of a main hardware configuration of a laptop PC according to the first embodiment.
FIG. 3 is a functional block diagram illustrating an example of the functional configuration of the information processing system according to the first embodiment.
FIG. 4 is a table illustrating a data example of an apparatus information storage unit in the first embodiment.
FIG. 5 is a table illustrating a data example of an erasure program storage unit in the first embodiment.
FIG. 6 is a table illustrating a data example of an erasure result storage unit in the first embodiment.
FIG. 7 is a first flowchart illustrating an example of the operation of the information processing system according to the first embodiment.
FIG. 8 is a second flowchart illustrating the example of the operation of the information processing system according to the first embodiment.
FIG. 9 is a functional block diagram illustrating an example of the functional configuration of an information processing system according to a second embodiment.
FIG. 10 is a first flowchart illustrating an example of the operation of the information processing system according to the second embodiment.
FIG. 11 is a second flowchart illustrating the example of the operation of the information processing system according to the second embodiment.

### DETAILED DESCRIPTION OF THE INVENTION

A data erasure method, an information processing system, and an information processing apparatus according to one embodiment of the present invention will be described below with reference to the accompanying drawings.

### [First Embodiment]

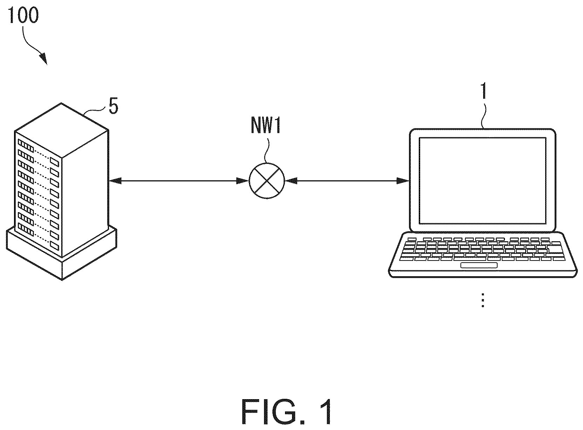

FIG. 1 is a configuration diagram illustrating an example of an information processing system 100 according to a first embodiment.

As illustrated in FIG. 1, the information processing system 100 includes a laptop PC1 and a management server 5.

The laptop PC1 is an information processing apparatus equipped with a built-in memory drive device (for example, an SSD 40 to be described later), which executes processing based on an OS (Operating System). The laptop PC1 is a personal computer used, for example, by a company, which is an information processing apparatus as a target for completely erasing data stored in a memory drive device (for example, an SSD 40 to be described later) in the information processing system 100. The laptop PC1 can be connected to the management server 5 through a network NW1. Note that the detailed configuration of the laptop PC1 will be described later.

The management server 5 is a server apparatus managed, for example, by a manufacturer of the laptop PC1, which can be connected to the laptop PC1 through the network NW1. The management server 5 is used in data erasure processing of the memory drive device (for example, the SSD 40 to be described later) built in the laptop PC1.

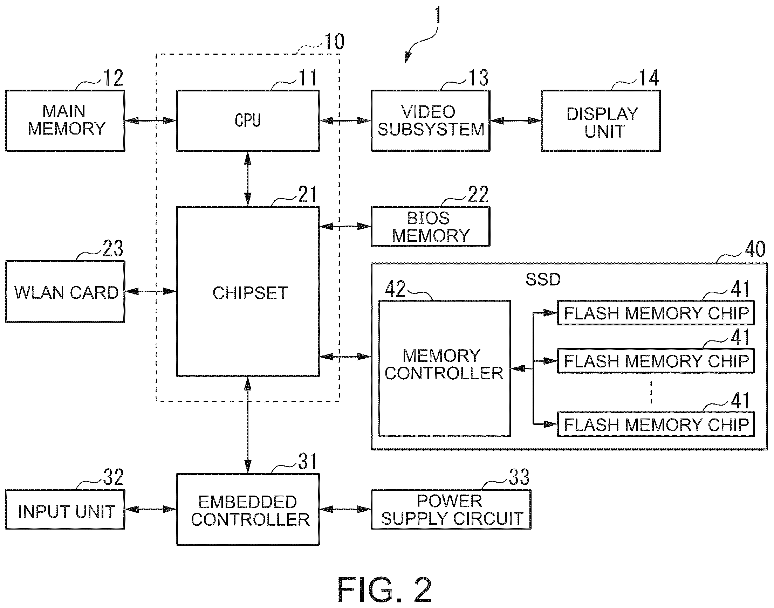

Referring next to FIG. 2, a main hardware configuration of the laptop PC1 will be described.

FIG. 2 is a diagram illustrating an example of the main hardware configuration of the laptop PC1 according to the present embodiment.

As illustrated in FIG. 2, the laptop PC1 includes a CPU 11, a main memory 12, a video subsystem 13, a display unit 14, a chipset 21, a BIOS memory 22, a WLAN card 23, an embedded controller 31, an input unit 32, a power supply circuit 33, and the SSD 40.

Note that the CPU 11 and the chipset 21 correspond to a main control unit 10 in the present embodiment. Further, the main control unit 10 is an example of a processor (main processor) that executes programs stored in a memory (the main memory 12).

The CPU (Central Processing Unit) 11 executes various kinds of arithmetic processing by program control to control the entire laptop PC 1.

The main memory 12 is a writable memory used as reading areas of execution programs of the CPU 11 or working areas to which processed data of the execution programs are written. The main memory 12 is composed, for example, of plural DRAM (Dynamic Random Access Memory) chips. The execution programs include a BIOS, the OS, various drivers for hardware-operating peripheral devices, various services/utilities, application programs, and the like.

Further, the main memory 12 is an example of a system memory that stores programs and data, which is equipped in the laptop PC 1 by a DIMM on which the plural DRAM chips are mounted.

The video subsystem 13 is a subsystem for implementing a function related to image display, which includes a video controller. This video controller processes drawing instructions from the CPU 11, writes processed drawing information into a video memory, and reads this drawing information from the video memory to output the drawing information to the display unit 14 as drawing data (display data).

The display unit 14 is, for example, a liquid crystal display to display a display screen based on the drawing data (display data) output from the video subsystem 13.

The chipset 21 includes controllers such as for USB, serial ATA (AT Attachment), an SPI (Serial Peripheral Interface) bus, a PCI (Peripheral Component Interconnect) bus, a PCI-Express bus, and an LPC (Low Pin Count) bus, and plural devices are connected thereto. In FIG. 2, as examples of devices, the SSD 40, the BIOS memory 22, the WLAN card 23, and the embedded controller 31 are connected to the chipset 21.

The BIOS memory 22 is configured, for example, by an electrically rewritable nonvolatile memory such as an EEPROM (Electrically Erasable Programmable Read Only Memory) or a flash ROM. The BIOS memory 22 stores a BIOS program, a control program (firmware) of the embedded controller 31, and the like.

The WLAN (Wireless Local Area Network) card 23 is connected to the network NW1 through wireless LAN to perform data communication. The WLAN card 23 can be connected to the management server 5 through the network NW1.

The embedded controller 31 (an example of a sub control unit) is a one-chip microcomputer which monitors and controls various devices (peripheral devices, sensors, and the like) regardless of the system state of the laptop PC 1. Further, the embedded controller 31 has a power management function to control the power supply circuit 33. Note that the embedded controller 31 is composed of a CPU, a ROM, a RAM, and the like, which are not illustrated, and includes multi-channel A/D input terminal and D/A output terminal, a timer, and digital input/output terminals. To the embedded controller 31, for example, the input unit 32, the power supply circuit 33, and the like are connected through these input/output terminals. The embedded controller 31 controls the operation of these units.

The input unit 32 is, for example, an input unit including an input device such as a keyboard and a pointing device such as a touch pad.

The power supply circuit 33 includes, for example, a DC/Dc converter, a charge/discharge unit, a battery unit, an AC/DC adapter, and the like to convert DC voltage supplied from the AC/DC adapter or the battery unit into plural voltages required to operate the laptop PC 1. Further, the power supply circuit 33 supplies power to each unit of the laptop PC 1 under the control of the embedded controller 31.

The SSD 40 (an example of a memory drive device) stores the OS, various driver, various services/utilities, application programs, and various data. The SSD 40 is connected to the chipset 21, for example, by serial ATA or through the PCI-Express bus. Note that the SSD 40 may also be connected to the CPU 11. In the present embodiment, it is assumed that the SSD 40 is connected to the chipset 21 by NVMe connection using the PCI-Express bus.

Further, the SSD 40 includes plural flash memory chips 41 and a memory controller 42.

The flash memory chips 41 are, for example, NAND flash memory chips, which are an example of a rewritable non-volatile memory chips. The flash memory chips 41 can erase data page by page or in blocks.

The memory controller 42 is, for example, a processor including a CPU, a ROM, a RAM, and the like, which are not illustrated, to control the SSD 40 comprehensively. For example, the memory controller 42 executes processing such as host interface (host I/F) control processing with the chipset 21, memory interface (memory I/F) control processing with the flash memory chips 41, and data management processing of the flash memory chips 41.

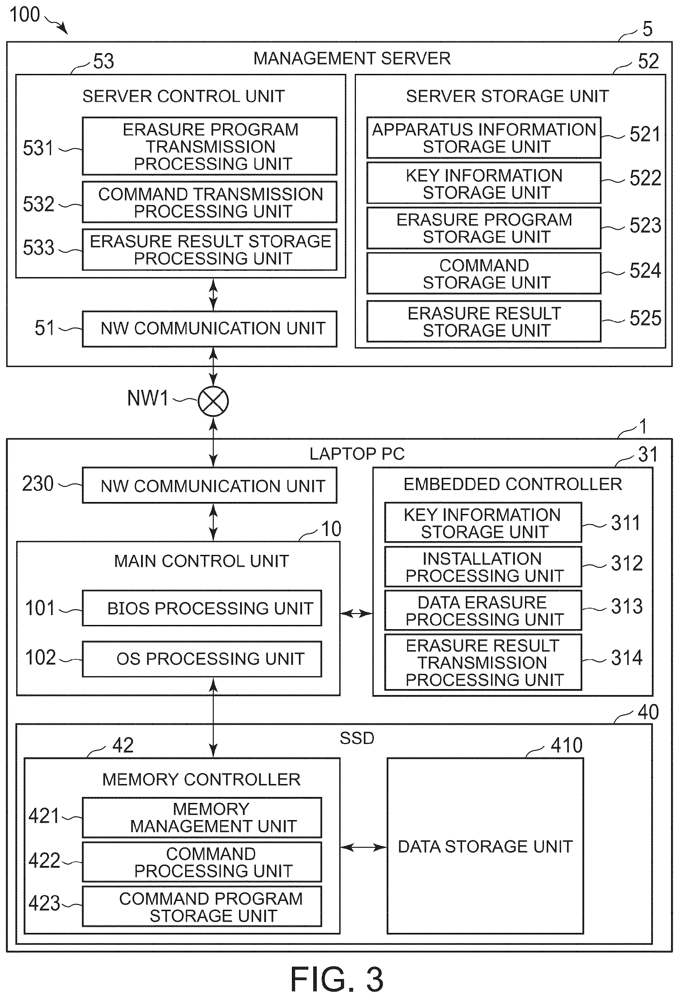

Referring next to FIG. 3, the functional configuration of the information processing system 100 according to the present embodiment will be described.

FIG. 3 is a functional block diagram illustrating an example of the functional configuration of the information processing system 100 according to the present embodiment. Note that only components related to the present invention among various functional components included in the information processing system 100 are illustrated in FIG. 3.

As illustrated in FIG. 3, the information processing system 100 includes the laptop PC1 and the management server 5.

The management server 5 includes an NW communication unit 51, a server storage unit 52, and a server control unit 53.

The NW (Net Work) communication unit 51 is a network adapter connectable to the network NW1, for example, by wired LAN, which can be connected to the laptop PC1 through the network NW1.

The server storage unit 52 is a storage unit realized, for example, by the RAM, an SSD, an HDD, or the like, which stores various information used by the management server 5. The server storage unit 52 includes an apparatus information storage unit 521, a key information storage unit 522, an erasure program storage unit 523, a command storage unit 524, and an erasure result storage unit 525.

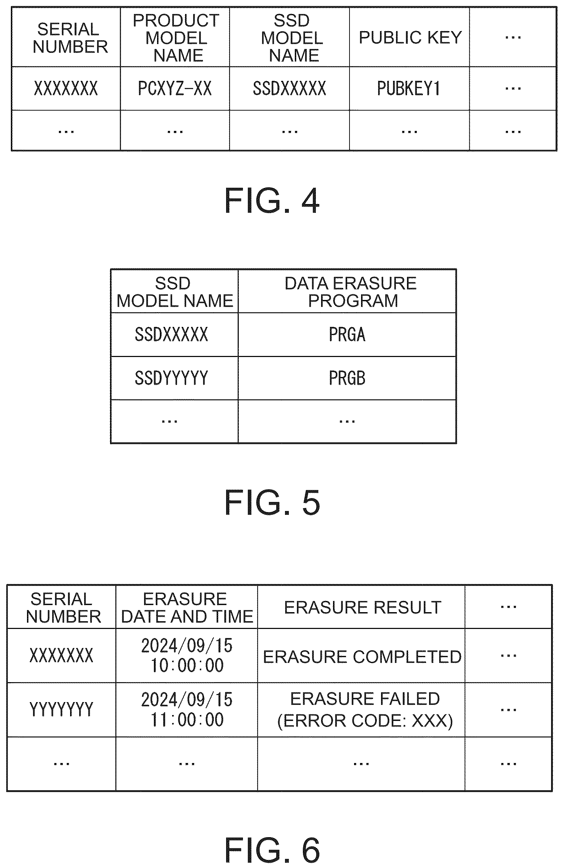

The apparatus information storage unit 521 stores apparatus information on each laptop PC1 manufactured and shipped by a manufacturer. For example, the apparatus information storage unit 521 stores the serial number and product model name of the laptop PC1, a public key of the laptop PC1 (PC public key), and the like. Here, the apparatus information storage unit 521 will be described with reference to FIG. 4.

FIG. 4 is a table illustrating a data example of the apparatus information storage unit 521 in the present embodiment.

As illustrated in FIG. 4, the apparatus information storage unit 521 stores the serial number, the product model name, an SSD model name, and the public key in association with one another.

Here, the serial number is an example of identification information for identifying the laptop PC1, which is a serial number assigned at the time of manufacturing the laptop PC1. Further, the product model name indicates a product model name or a product name of the laptop PC1, and the SSD model name indicates a model name or a device name of the SSD 40 equipped in the laptop PC1. Further, the public key here indicates a PC public key.

The PC public key is a public key for public-key cryptography assigned to the laptop PC1, which forms a key pair with a private key (PC private key) assigned to the laptop PC1 in the same way. The key pair of the PC public key and the PC private key is assigned at the time of manufacturing the laptop PC1, and one key pair is assigned to one laptop PC1. The public-key cryptography is, for example, RSA cryptosystem, elliptic curve cryptography, or the like.

In the example illustrated in FIG. 4, the laptop PC1 with a serial number of "XXXXXXX" indicates that the product model name is "PCXYZ-XX" and the SSD model name is "SSDXXXXX." Further, it is indicated that the public key (PC public key) of the laptop PC1 concerned is "PUBKEY1."

Returning to the description of FIG. 3, the key information storage unit 522 stores a key pair of a private key (server private key) and a public key (server public key) of the management server 5.

Note that, in the present embodiment, the server private key and the server public key are an example of a first private key and a first public key, and the PC private key and the PC public key are an example of a second private key and a second public key.

The erasure program storage unit 523 stores a data erasure program to be installed on the SSD 40. The data erasure program is a program executable by the SSD 40 to automatically erase data stored in the SSD 40 completely. Note that the erasure program storage unit 523 may also change the data erasure program, for example, for each model name (device name) of the SSD 40. Here, a data example of the erasure program storage unit 523 will be described with reference to FIG. 5.

Further, the data erasure program is firmware for the latest SSD 40 provided, for example, by a vendor of the SSD 40, which may be firmware for the data erasure program or firmware for the entire SSD 40 including the data erasure program.

FIG. 5 is a table illustrating a data example of the erasure program storage unit 523 in the present embodiment.

As illustrated in FIG. 5, the erasure program storage unit 523 stores an SSD model name and a data erasure program in association with each other.

In the example illustrated in FIG. 5, "PRGA" is stored in the erasure program storage unit 523 as a data erasure program corresponding to an SSD model name of "SSDXXXXX," and "PRGB" is stored as a data erasure program corresponding to an SSD model name of "SSDYYYYY."

Returning to the description of FIG. 3 again, the command storage unit 524 stores an erase command to be sent to the SSD 40 when data of the SSD 40 is erased by the data erasure program. For example, the command storage unit 524 may store the SSD model name and command information indicative of the erase command in association with each other.

The erasure result storage unit 525 stores a data erasure result as an execution result when the data erasure program described above is executed on the SSD 40 of the laptop PC. Here, a data example of the erasure result storage unit 525 will be described with reference to FIG. 6.

FIG. 6 is a table illustrating a data example of the erasure result storage unit 525 in the present embodiment.

For example, as illustrated in FIG. 6, the erasure result storage unit 525 stores a serial number, erasure date and time, and an erasure result in association with one another.

Here, the serial number is a serial number of the laptop PC1, and the erasure date and time is execution date and time of the data erasure program. Further, the erasure result is information indicative of the execution result of the data erasure program, which may also contain an error code or the like, for example, in case of an erasure failure.

In the example illustrated in FIG. 6, as for a laptop PC1 with a serial number of "XXXXXXX," it is indicated that the data erasure program was executed on the SSD 40 on "2024/09/15, 10:00:00" (September 15, 2024, 10:00) and that the erasure result is "ERASURE COMPLETED."

Further, as for a laptop PC1 with a serial number of "YYYYYYY," it is indicated that the data erasure program was executed on the SSD 40 on "2024/09/15, 11:00:00" (September 15, 2024, 11:00) and that the erasure result is "ERASURE FAILED (ERROR CODE: XXX)."

Returning to the description of FIG. 3 again, the server control unit 53 is a functional unit implemented, for example, by an unillustrated CPU executing programs stored in the server storage unit 52. The server control unit 53 executes a registration process of information stored in the apparatus information storage unit 521, various processes for performing erasure processing on data stored in the SSD 40 of the laptop PC1, and the like.

The server control unit 53 includes an erasure program transmission processing unit 531, a command transmission processing unit 532, and an erasure result storage processing unit 533.

The erasure program transmission processing unit 531 executes first transmission processing to transmit a data erasure program for the SSD 40 to the laptop PC1 using cryptographic processing by the server private key as the private key of the management server 5. The erasure program transmission processing unit 531 acquires, from the erasure program storage unit 523, a data erasure program corresponding to a laptop PC1 (SSD 40) as a data erasure target. In other words, the erasure program transmission processing unit 531 acquires, from the erasure program storage unit 523, a data erasure program corresponding to the serial number of the laptop PC1 as the erasure target.

The erasure program transmission processing unit 531 generates, from the acquired data erasure program, an electronic signature of the data erasure program using the server private key stored in the key information storage unit 522. For example, the erasure program transmission processing unit 531 generates a hash value of the data erasure program using a hash function, and executes an encryption process in public-key cryptography to encrypt the hash value by the server private key in order to generate an electronic signature of the data erasure program.

The erasure program transmission processing unit 531 adds the electronic signature to the data erasure program, and transmits the data erasure program to the laptop PC1 through the NW communication unit 51.

The command transmission processing unit 532 executes second transmission processing to transmit, to the laptop PC1 using cryptographic processing by the server private key, the erase command that causes the processor (for example, the memory controller 42) of the SSD 40 to run the data erasure program. The erasure program transmission processing unit 531 acquires, from the command storage unit 524, the erase command corresponding to the laptop PC1 (SSD 40) as the data erasure target.

The command transmission processing unit 532 generates, from the acquired erase command, an electronic signature of the erase command using the server private key stored in the key information storage unit 522. For example, the command transmission processing unit 532 generates a hash value of the erase command using the hash function, and executes an encryption process in public-key cryptography to encrypt the hash value by the server private key in order to generate an electronic signature of the erase command.

The command transmission processing unit 532 adds the electronic signature to the erase command and transmits the erase command to the laptop PC1 through the NW communication unit 51.

The erasure result storage processing unit 533 checks the validity of the data erasure result using the PC public key (second public key) as the public key of the laptop PC1, and when the data erasure result is validated, the erasure result storage processing unit 533 executes a result storage process to store, in the erasure result storage unit 525, the validated data erasure result.

For example, when receiving the data erasure result and the electronic signature from the laptop PC1 through the NW communication unit 51, the erasure result storage processing unit 533 generates a hash value of the data erasure result using the hash function. Further, the erasure result storage processing unit 533 executes a decryption process in public-key cryptography to decrypt the received electronic signature by the PC public key in order to generate a decrypted value (hash value) of the electronic signature. Note that the erasure result storage processing unit 533 acquires, from the apparatus information storage unit 521, the PC public key corresponding to the serial number of the laptop PC1 as the erasure target.

The erasure result storage processing unit 533 determines the validity of the data erasure result depending on whether or not the generated hash value of the data erasure result matches the decrypted value (hash value) of the electronic signature. When the generated hash value of the data erasure result matches the decrypted value (hash value) of the electronic signature, the erasure result storage processing unit 533 determines that the data erasure result is validated, and stores the data erasure result in the erasure result storage unit 525. For example, as illustrated in FIG. 6, the erasure result storage processing unit 533 stores, in the erasure result storage unit 525, the serial number, the erasure date and time, and the erasure result in association with one another.

On the other hand, when the generated hash value of the data erasure result does not match the decrypted value (hash value) of the electronic signature, the erasure result storage processing unit 533 determines that the data erasure result is not validated, and executes an abnormal termination process. For example, as the abnormal termination process, the erasure result storage processing unit 533 notifies (notifies, by email or the like,) an administrator of the laptop PC1 of the occurrence of an abnormality indicating that the data erasure result is not valid.

The laptop PC1 includes the main control unit 10, the embedded controller 31, the SSD 40, and an NW communication unit 230.

The NW communication unit 230 is a functional unit implemented, for example, by the WLAN card 23, which can be connected to the management server 5 through the network NW1.

The main control unit 10 is a functional unit implemented by causing the CPU 11 to execute programs stored in the SSD 40, the BIOS memory 22, the main memory 12, and the like. The main control unit 10 executes processing based on the OS and the BIOS. For example, the main control unit 10 includes a BIOS processing unit 101 and an OS processing unit 102.

The BIOS processing unit 101 is a functional unit implemented, for example, by causing the CPU 11 to execute a BIOS program stored in the BIOS memory 22 to execute processing based on the BIOS.

The OS processing unit 102 is a functional unit implemented, for example, by causing the CPU 11 to execute the OS program stored in the SSD 40 to execute processing based on the OS.

The embedded controller 31 communicates with the management server 5 when executing data erasure processing on the SSD 40 to execute various processes for executing the data erasure processing on the SSD 40. The embedded controller 31 includes a key information storage unit 311, an installation processing unit 312, a data erasure processing unit 313, and an erasure result transmission processing unit 314.

The key information storage unit 311 is a storage unit realized, for example, by a built-in storage unit of the embedded controller 31 or a firmware area of the BIOS memory 22 for the embedded controller 31, which stores key information such as the PC private key, the server public key, and the like. Note that the key information storage unit 311 is a secure area that is not directly accessible from outside such as from the OS, which is realized by a security area that is impossible to illegally read the PC private key and the server public key from outside.

Note that the key information stored in the key information storage unit 311 is stored, for example, at the time of manufacturing the laptop PC1.

The installation processing unit 312 checks the validity of the data erasure program using the server public key (first public key) as the public key of the management server 5, and when the data erasure program is validated, the installation processing unit 312 executes an installation process of installing the validated data erasure program on the SSD 40.

For example, when receiving the data erasure program and the electronic signature from the management server 5 through the NW communication unit 230, the installation processing unit 312 generates a hash value of the data erasure program using the hash function. Further, the installation processing unit 312 executes a decryption process in public-key cryptography to decrypt the received electronic signature by the server public key stored in the key information storage unit 311 in order to generate a decrypted value (hash value) of the electronic signature.

The installation processing unit 312 determines the validity of the data erasure program depending on whether or not the generated hash value of the data erasure program matches the decrypted value (hash value) of the electronic signature. When the generated hash value of the data erasure program matches the decrypted value (hash value) of the electronic signature, the installation processing unit 312 determines that the data erasure program is valid, and installs the data erasure program on the SSD 40.

The installation processing unit 312 transmits the data erasure program to the SSD 40 through the BIOS processing unit 101 to install the latest data erasure program on the SSD 40.

On the other hand, when the generated hash value of the data erasure program does not match the decrypted value (hash value) of the electronic signature, the installation processing unit 312 determines that the data erasure program is not valid, and executes the abnormal termination process. For example, as the abnormal termination process, the installation processing unit 312 stops the data erasure processing of the SSD 40 and notifies the management server 5 of abnormal termination.

The data erasure processing unit 313 checks the validity of the erase command using the server public key, and when the erase command is validated, the data erasure processing unit 313 transmits the validated erase command to the SSD 40 to execute data erasure processing by the data erasure program.

For example, when receiving the erase command and the electronic signature from the management server 5 through the NW communication unit 230, the data erasure processing unit 313 generates a hash value of the erase command using the hash function. Further, the data erasure processing unit 313 executes a decryption process in public-key cryptography to decrypt the received electronic signature by the server public key stored in the key information storage unit 311 in order to generate a decrypted value (hash value) of the electronic signature.

The data erasure processing unit 313 determines the validity of the erase command depending on whether or not the generated hash value of the erase command matches the decrypted value (hash value) of the electronic signature. When the generated hash value of the erase command matches the decrypted value (hash value) of the electronic signature, the installation processing unit 312 determines that the erase command is valid, and transmits the erase command to the SSD 40.

The data erasure processing unit 313 transmits the erase command to the SSD 40 through the BIOS processing unit 101 (BIOS) to cause the SSD 40 to execute data erasure processing by the data erasure program.

On the other hand, when the generated hash value of the erase command does not match the decrypted value (hash value) of the electronic signature, the data erasure processing unit 313 determines that the erase command is not valid, and executes the abnormal termination process. For example, as the erase command abnormal termination process, the data erasure processing of the SSD 40 is stopped and abnormal termination is notified to the management server 5.

The erasure result transmission processing unit 314 executes third transmission processing to transmit the data erasure result as the result of the data erasure processing to the management server 5 using cryptographic processing by the PC private key (second private key) as the private key of the laptop PC1.

For example, the erasure result transmission processing unit 314 acquires the data erasure result as the execution result of the erase command from the SSD 40 through the BIOS processing unit 101 (BIOS) to generate a hash value of the acquired data erasure result using the hash function. The erasure result transmission processing unit 314 executes an encryption process in public-key cryptography to encrypt the generated hash value by the PC private key stored in the key information storage unit 311 in order to generate an electronic signature of the data erasure result.

The erasure result transmission processing unit 314 adds the electronic signature to the data erasure result and transmits the data erasure result to the management server 5 through the NW communication unit 230.

The SSD 40 includes the memory controller 42 and a data storage unit 410.

The data storage unit 410 is a storage unit realized by the plural flash memory chips 41 described above, that is, a storage unit as a target of the data erasure processing.

The memory controller 42 includes a memory management unit 421, a command processing unit 422, and a command program storage unit 423.

The command program storage unit 423 is a storage unit realized, for example, by a RAM, a ROM (a flash memory or the like) built in the memory controller 42, the flash memory chips 41 of the SSD 40, and the like, to store a command processing program installed from outside. For example, when the data erasure program is installed on the SSD 40, the command program storage unit 423 stores the data erasure program concerned.

The memory management unit 421 is a functional unit implemented by an unillustrated CPU (processor) of the memory controller 42 or the like to manage the data storage unit 410.

The command processing unit 422 is a functional unit implemented by the unillustrated CPU (processor) of the memory controller 42 or the like to execute various command processes for the SSD 40. For example, when receiving the erase command from the data erasure processing unit 313 through the BIOS processing unit 101 (BIOS), the command processing unit 422 runs the data erasure program stored in the command program storage unit 423 to execute data erasure processing of the data storage unit 410.

Next, the operation of the information processing system 100 according to the present embodiment will be described with reference to the accompanying drawings.

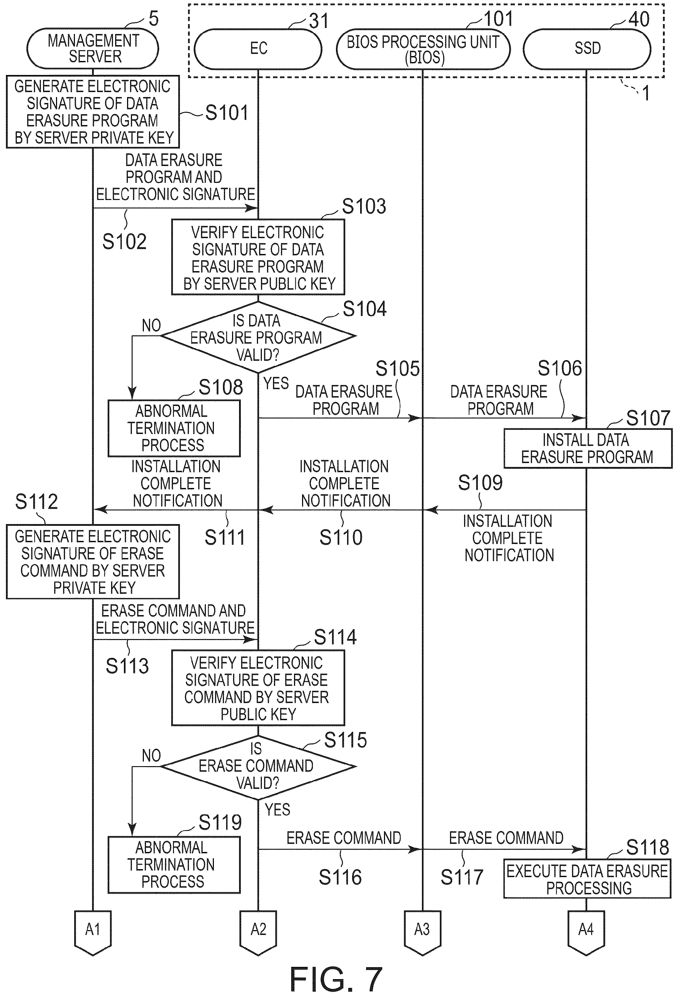

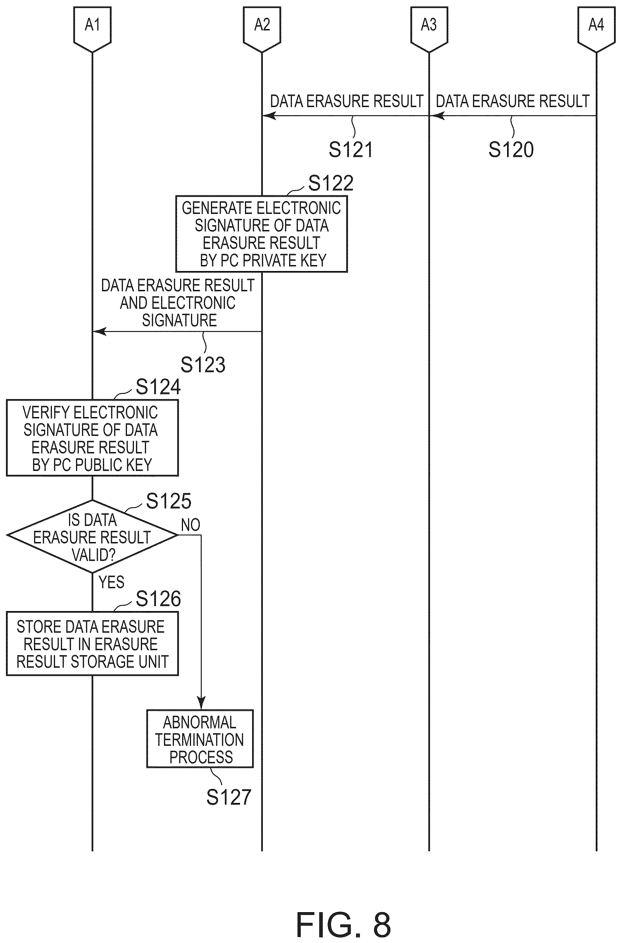

FIG. 7 and FIG. 8 are flowcharts illustrating an example of the operation of the information processing system 100 according to the present embodiment.

As illustrated in FIG. 7 and FIG. 8, the management server 5 first generates an electronic signature of the data erasure program by the server private key (step S101). The erasure program transmission processing unit 531 of the management server 5 acquires, from the erasure program storage unit 523, the data erasure program corresponding to the laptop PC1 (SSD 40) as the data erasure target. For example, the erasure program transmission processing unit 531 generates a hash value of the data erasure program using the hash function, and executes an encryption process in public-key cryptography to encrypt the hash value by the server private key in order to generate an electronic signature of the data erasure program.

Note that the management server 5 may start the process of step S101 upon request from the laptop PC1 as the data erasure target, or the management server 5 may take the initiative to start the process of step S101 upon request from the administrator of the laptop PC1 or when execution conditions (for example, the set date and time, and the like) are met.

Further, the data erasure program may be the latest firmware for the SSD 40 provided by the vendor of the SSD 40.

Next, the management server 5 transmits the data erasure program and the electronic signature to the embedded controller 31 of the laptop PC1 (step S102). The erasure program transmission processing unit 531 transmits the data erasure program and the electronic signature to the laptop PC1 (the embedded controller 31) through the NW communication unit 51.

Next, the embedded controller 31 verifies the electronic signature of the data erasure program by the server public key (step S103). For example, when receiving the data erasure program and the electronic signature from the management server 5 through the NW communication unit 230, the installation processing unit 312 of the embedded controller 31 generates a hash value of the data erasure program using the hash function. Further, the installation processing unit 312 executes a decryption process in public-key cryptography to decrypt the received electronic signature by the server public key stored in the key information storage unit 311 in order to generate a decrypted value (hash value) of the electronic signature. The installation processing unit 312 checks the validity of the data erasure program depending on whether or not the generated hash value of the data erasure program matches the decrypted value (hash value) of the electronic signature.

Next, the installation processing unit 312 determines whether or not the data erasure program is valid (step S104). When the generated hash value of the data erasure program matches the decrypted value (hash value) of the electronic signature, the installation processing unit 312 determines that the data erasure program is valid (step S104: YES), and advances the processing to step S105. On the other hand, when determining that the data erasure program is not valid (step S104: NO), the installation processing unit 312 advances the processing to step S108 to execute the abnormal termination process.

In step S105, the embedded controller 31 transmits the data erasure program to the BIOS processing unit 101 (BIOS), and the BIOS processing unit 101 (BIOS) transmits the data erasure program to the SSD 40 (step S106).

Next, the memory controller 42 of the SSD 40 installs the data erasure program (step S107). The memory controller 42 stores, in the command program storage unit 423, the data erasure program received from the installation processing unit 312 through the BIOS, and installs the data erasure program to make the data erasure program executable.

Next, the SSD 40 transmits an installation complete notification to the BIOS processing unit 101 (BIOS) (step S109), and the BIOS processing unit 101 (BIOS) transfers the installation complete notification to the embedded controller 31 (step S110).

Next, the embedded controller 31 transmits the installation complete notification to the management server 5 through the NW communication unit 230 (step S111).

Next, the management server 5 generates an electronic signature of the erase command by the server private key (step S112). The command transmission processing unit 532 of the management server 5 acquires, from the command storage unit 524, the erase command corresponding to the laptop PC1 (SSD 40) as the data erasure target. For example, the command transmission processing unit 532 generates a hash value of the erase command using the hash function, and executes an encryption process in public-key cryptography to encrypt the hash value by the server private key in order to generate an electronic signature of the erase command.

Next, the management server 5 transmits the erase command and the electronic signature to the embedded controller 31 of the laptop PC1 (step S113). The command transmission processing unit 532 transmits the erase command and the electronic signature to the laptop PC1 (the embedded controller 31) through the NW communication unit 51.

Next, the embedded controller 31 verifies the electronic signature of the erase command by the server public key (step S114). For example, when receiving the erase command and the electronic signature from the management server 5 through the NW communication unit 230, the data erasure processing unit 313 of the embedded controller 31 generates a hash value of the erase command using the hash function. Further, the data erasure processing unit 313 executes a decryption process in public-key cryptography to decrypt the received electronic signature by the server public key stored in the key information storage unit 311 in order to generate a decrypted value (hash value) of the electronic signature. The data erasure processing unit 313 checks the validity of the erase command depending on whether or not the generated hash value of the erase command matches the decrypted value (hash value) of the electronic signature.

Next, the data erasure processing unit 313 determines whether or not the erase command is valid (step S115). When the generated hash value of the erase command matches the decrypted value (hash value) of the electronic signature, the data erasure processing unit 313 determines that the erase command is valid (step S115: YES), and advances the processing to step S116. On the other hand, when determining that the erase command is not valid (step S115: NO), the data erasure processing unit 313 advances the processing to step S119 to execute the abnormal termination process.

In step S116, the embedded controller 31 transmits the erase command to the BIOS processing unit 101 (BIOS), and the BIOS processing unit 101 (BIOS) transmits the erase command to the SSD 40 (step S117).

Next, the command processing unit 422 of the SSD 40 executes data erasure processing on the SSD 40 (step S118). According to the received erase command, the command processing unit 422 executes the data erasure program stored in the command program storage unit 423 to completely erase data from the data storage unit 410.

Next, the command processing unit 422 transmits, to the BIOS processing unit 101 (BIOS), a data erasure result as the result of executing the erase command (step S120), and the BIOS processing unit 101(BIOS) transfers the data erasure result to the embedded controller 31 (step S121).

Next, the erasure result transmission processing unit 314 of the embedded controller 31 generates an electronic signature of the data erasure result by the PC private key (step S122). For example, the erasure result transmission processing unit 314 generates a hash value of the acquired data erasure result using the hash function, and executes an encryption process in public-key cryptography to encrypt the generated hash value by the PC private key stored in the key information storage unit 311 in order to generate an electronic signature of the data erasure result.

Next, the erasure result transmission processing unit 314 transmits the data erasure result and the electronic signature to the management server 5 (step S123). The erasure result transmission processing unit 314 adds the electronic signature to the data erasure result and transmits the data erasure result to the management server 5 through the NW communication unit 230.

Next, the management server 5 verifies the electronic signature of the data erasure result by the PC public key (step S124). For example, the management server 5 generates a hash value of the data erasure result using the hash function. Further, the erasure result storage processing unit 533 executes a decryption process in public-key cryptography to decrypt the received electronic signature by the PC public key in order to generate a decrypted value (hash value) of the electronic signature. The erasure result storage processing unit 533 checks the validity of the data erasure result depending on whether or not the generated hash value of the data erasure result matches the decrypted value (hash value) of the electronic signature.

The erasure result storage processing unit 533 determines whether or not the data erasure result is valid (step S125). When the generated hash value of the data erasure result matches the decrypted value (hash value) of the electronic signature, the erasure result storage processing unit 533 determines that the data erasure result is valid (step S125: YES), and advances the processing to step S126. On the other hand, when determining that the data erasure result is not valid (step S125: NO), the erasure result storage processing unit 533 advances the processing to step S127 to execute the abnormal termination process.

In step S126, the erasure result storage processing unit 533 stores the data erasure result in the erasure result storage unit 525. For example, as illustrated in FIG. 6, the erasure result storage processing unit 533 stores, in the erasure result storage unit 525, the serial number, the erasure date and time, and the erasure result in association with one another.

Note that, in FIG. 7 and FIG. 8, the processes of step S101 and step S102 correspond to a first transmission step, and the processes of step S112 and step S113 correspond to a second transmission step. Further, the processes of step S122 and step S123 correspond to a third transmission step.

Further, the processes from step S103 to step S106 (or to step S107) correspond to an installation step, the processes from step S114 to step S117 (or to step S118) correspond to a data erasure step. Further, the processes from step S124 to step S126 correspond to a result storage step.

As described above, a data erasure method according to the present embodiment is a data erasure method for the laptop PC1 (information processing apparatus) equipped with the built-in SSD 40 (memory drive device), and the data erasure method includes the first transmission step, the installation step, the second transmission step, and the data erasure step. In the first transmission step, the management server 5 that manages the laptop PC1 transmits, to the laptop PC1, a data erasure program for the SSD 40 using cryptographic processing by the server private key (first private key) as the private key of the management server 5. In the installation step, the laptop PC1 checks the validity of the data erasure program using the server public key (first public key) as the public key of the management server 5, and when the data erasure program is validated, the laptop PC1 installs the validated data erasure program on the SSD 40. In the second transmission step, the management server 5 transmits an erase command to the laptop PC1 using cryptographic processing by the server private key to cause a processor of the SSD 40 to run the data erasure program. In the data erasure step, the laptop PC1 checks the validity of the erase command using the server public key, and when the erase command is validated, the laptop PC1 transmits the validated erase command to the SSD 40 to execute data erasure processing by the data erasure program.

Thus, since the data erasure method according to the present embodiment erases data from the SSD 40 using the data erasure program and the erase command encrypted by the server private key (first private key) and transmitted from the management server 5 and validated by the server public key (first public key), the data can be erased securely in erasing the data on the SSD 40 while guaranteeing reliability. For example, when disposing of a laptop PC1 used by a company, the data erasure method according to the present embodiment can ensure that the data on the SSD 40 built in the laptop PC1 has been completely erased.

Further, the data erasure method according to the present embodiment includes the third transmission step and the result storage step. In the third transmission step, the laptop PC1 (the erasure result transmission processing unit 314) transmits the data erasure result as the result of the data erasure processing (the erase command) to the management server 5 using an encryption process by the PC private key (second private key) as the private key of the laptop PC1. In the result storage step, the management server 5 checks the validity of the data erasure result using the PC public key (second public key) as the public key of the laptop PC1, and when the data erasure result is validated, the management server 5 stores the validated data erasure result in the erasure result storage unit 525.

Thus, in the data erasure method according to the present embodiment, the management server 5 can store the data erasure result the reliability of which is guaranteed, and the stored data erasure result can be used as evidence to prove that the data on the SSD 40 of the laptop PC1 has been completely erased, for example, when disposing of the laptop PC1 used by the company.

Further, in the present embodiment, the laptop PC1 includes the embedded controller 31 (sub control unit) as a sub control unit capable of operating independently of the main control unit 10 that executes processing based on the OS and the BIOS and having a security area as a secure area directly inaccessible from outside and storing at least the server public key and the PC private key. In the installation step and the data erasure step, the embedded controller 31 checks the validities of the data erasure program and the erase command, and the laptop PC1 transmits the data erasure program and the erase command to the SSD 40 through the embedded controller 31 and the BIOS.

Thus, since the data erasure method according to the present embodiment checks the validities of the data erasure program and the erase command using the embedded controller 31 (the sub control unit) operating independently of the main control unit 10 and having the security area, the possibility of erasing data, for example, by malicious data erasure program and erase command can be further reduced. Therefore, the data erasure method according to the present embodiment can erase data even more securely in erasing the data on the SSD 40, and higher reliability can be guaranteed.

Further, in the present embodiment, the embedded controller 31 transmits the data erasure result to the management server 5 using cryptographic processing by the PC private key in the third transmission step.

Thus, the data erasure method according to the present embodiment can further increase the reliability of the data erasure result using the embedded controller 31.

Further, in the present embodiment, the management server 5 generates signature information (for example, an electronic signature) of transmission data using cryptographic processing by the server private key, adds the signature information (for example, the electronic signature) to the transmission data for which the signature information is generated, and transmits the transmission data to the laptop PC1 in the first transmission step and the second transmission step. In the installation step and the data erasure step, the laptop PC1 checks the validities of the data erasure program and the erase command based on the signature information (for example, electronic signatures) and the server public key. In the third transmission step, the laptop PC1 generates signature information (for example, an electronic signature) of the data erasure result using cryptographic processing by the PC private key, adds the signature information to the data erasure result, and transmits the data erasure result to the management server 5. In the result storage step, the management server 5 checks the validity of the data erasure result based on the signature information (for example, the electronic signature) of the data erasure result and the PC public key.

Thus, the data erasure method according to the present embodiment can check the validities of the data erasure program and the erase command and the validity of the data erasure result using the signature information (for example, electronic signatures) without imposing a heavy processing load.

Further, in the present embodiment, the memory drive device is the SSD 40.

Thus, since the data erasure method according to the present embodiment can erase data securely in erasing the data on the SSD 40, reliability can be guaranteed.

Further, the information processing system 100 according to the present embodiment includes the laptop PC1 equipped with the built-in SSD 40, and the management server 5 that manages the laptop PC1. The management server 5 executes first transmission processing and second transmission processing. In the first transmission processing, the management server 5 transmits a data erasure program for the SSD 40 to the laptop PC1 using cryptographic processing by the server private key as the private key of the management server 5. In the second transmission processing, the management server 5 transmits, to the laptop PC1 using cryptographic processing by the server private key, an erase command to cause the processor of the SSD 40 to run the data erasure program. Further, the laptop PC1 executes installation processing and data erasure processing. In the installation processing, the laptop PC1 checks the validity of the data erasure program using the server public key as the public key of the management server 5, and when the data erasure program is validated, the laptop PC1 installs the validated data erasure program on the SSD 40. In the data erasure processing, the laptop PC1 checks the validity of the erase command using the server public key, and when the erase command is validated, the laptop PC1 transmits the validated erase command to the SSD 40 to execute the data erasure processing by the data erasure program.

Thus, the information processing system 100 according to the present embodiment has the same effect as the data erasure method described above, and data can be erased securely in erasing the data on the SSD 40, and reliability can be guaranteed.

Further, the laptop PC1 (information processing apparatus) according to the present embodiment is a laptop PC1 in an information processing system including the laptop PC1 equipped with the built-in SSD 40 and the management server 5 that manages the laptop PC1, and the laptop PC1 includes the installation processing unit 312 and the data erasure processing unit 313. The installation processing unit 312 acquires a data erasure program for the SSD 40 transmitted by the management server 5 using cryptographic processing by the server private key as the private key of the management server 5, checks the validity of the data erasure program using the server public key as the public key of the management server 5, and when the data erasure program is validated, the installation processing unit 312 installs the validated data erasure program on the SSD 40. The data erasure processing unit 313 acquires an erase command transmitted by the management server 5 using cryptographic processing by the server private key to cause the processor of the SSD 40 to run the data erasure program, checks the validity of the erase command using the server public key, and when the erase command is validated, the data erasure processing unit 313 transmits the validated erase command to the SSD 40 to execute data erasure processing by the data erasure program.

Thus, since the laptop PC1 (information processing apparatus) according to the present embodiment has the same effect as the data erasure method and the information processing system 100 described above, data can be erased securely in erasing the data on the SSD 40, and reliability can be guaranteed.

Next, an information processing system 100a according to a second embodiment will be described with reference to the accompanying drawings. In the second embodiment, a variation in which processing of the installation processing unit 312, the data erasure processing unit 313, and the erasure result transmission processing unit 314 is executed by a BIOS processing unit 101a instead of the embedded controller 31 will be described.

### [Second Embodiment]

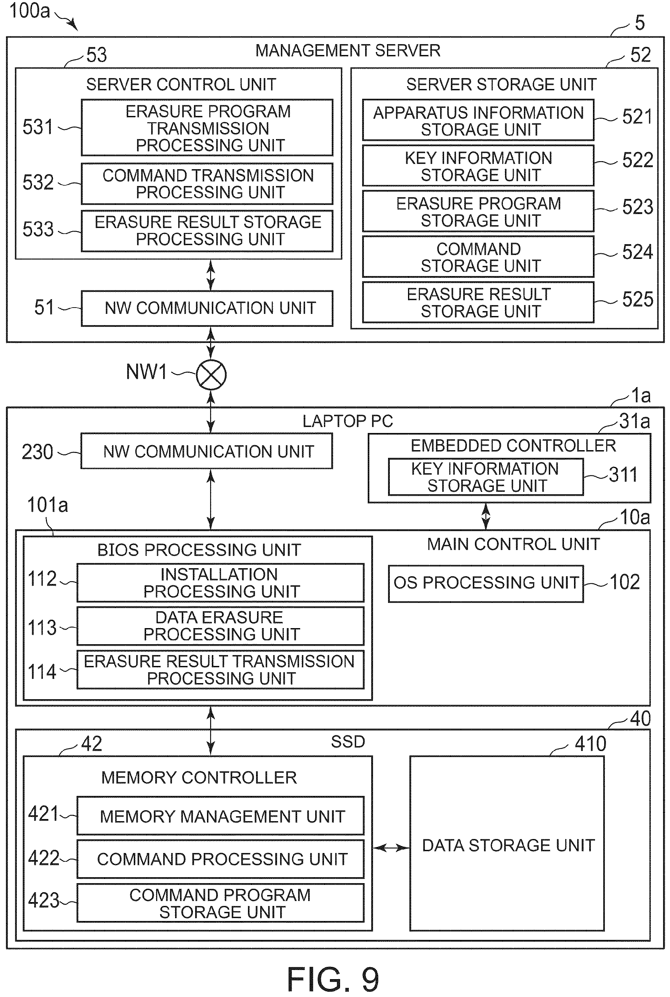

FIG. 9 is a functional block diagram illustrating an example of the functional configuration of the information processing system 100a according to the second embodiment. Note that only components related to the present invention among various functional components included in the information processing system 100a are illustrated in FIG. 9.

Note that since the configuration of the information processing system 100a and the main hardware configuration of a laptop PC1a of the present embodiment are the same as those in the first embodiment illustrated in FIG. 1 and FIG. 2, the description thereof will be omitted here.

Further, in FIG. 9, the same components as those in FIG. 3 described above are denoted by the same reference numerals, and the description thereof will be omitted.

As illustrated in FIG. 9, the information processing system 100a includes the laptop PC1a and the management server 5. Further, the laptop PC1a includes a main control unit 10a, an embedded controller 31a, the SSD 40, and the NW communication unit 230.

The main control unit 10a is a functional unit implemented by causing the CPU 11 to execute programs stored in the SSD 40, the BIOS memory 22, the main memory 12, and the like. The main control unit 10a executes processing based on the OS and the BIOS. For example, the main control unit 10a includes a BIOS processing unit 101a and the OS processing unit 102.

The BIOS processing unit 101a is a functional unit implemented, for example, by causing the CPU 11 to execute the BIOS program stored in the BIOS memory 22 to execute processing based on the BIOS. The BIOS processing unit 101a includes an installation processing unit 112, a data erasure processing unit 113, and an erasure result transmission processing unit 114.

The installation processing unit 112, the data erasure processing unit 113, and the erasure result transmission processing unit 114 execute the same processing as the installation processing unit 312, the data erasure processing unit 313, and the erasure result transmission processing unit 314 of the first embodiment.

The embedded controller 31a communicates with the management server 5 when executing data erasure processing on the SSD 40 to execute various processes for executing data erasure processing on the SSD 40. The embedded controller 31a includes the key information storage unit 311.

The embedded controller 31a is similar to the embedded controller 31 of the first embodiment except for that most of the functions of the installation processing unit 312, the data erasure processing unit 313, and the erasure result transmission processing unit 314 are moved to the BIOS processing unit 101a.

Since the other functional components are the same as those of the first embodiment, the description thereof is omitted here.

Next, the operation of the information processing system 100a according to the present embodiment will be described with reference to the accompanying drawings.

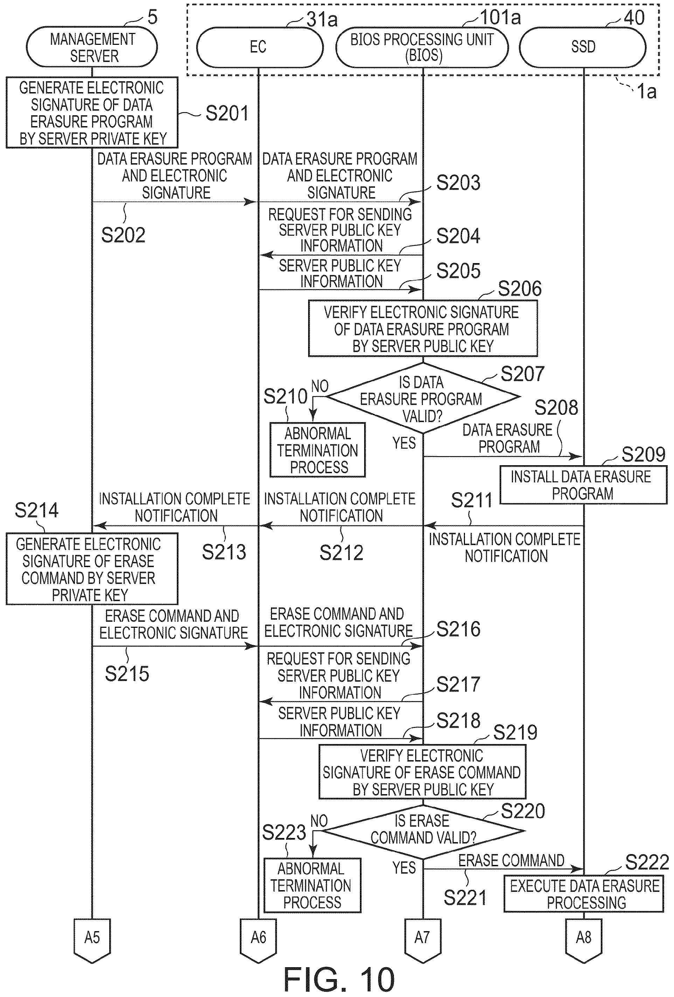

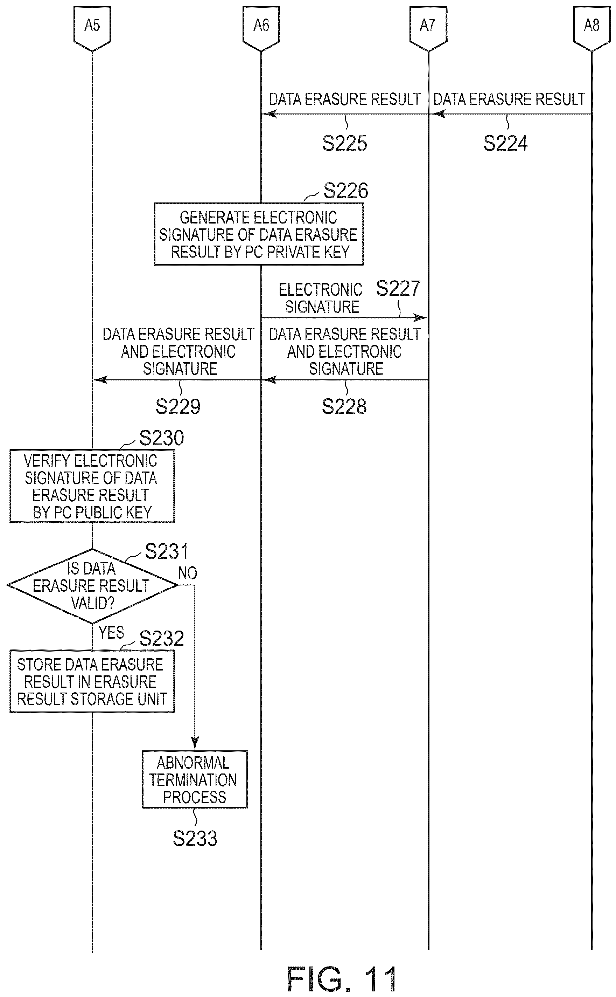

FIG. 10 and FIG. 11 are flowcharts illustrating an example of the operation of the information processing system 100a according to the present embodiment.

In FIG. 10 and FIG. 11, since processes of step S201 and step S202 are the same as the processes of step S101 and step S102 illustrated in FIG. 7, the description thereof is omitted here.

Next, the embedded controller 31a transmits, to the BIOS processing unit 101a, the data erasure program and the electronic signature received (step S203). Thus, the installation processing unit 112 of the BIOS processing unit 101a receives the data erasure program and the electronic signature.

Next, the BIOS processing unit 101a transmits, to the embedded controller 31a, a request for sending server public key information (step S204). The installation processing unit 112 requests the server public key information from the embedded controller 31a to verify the electronic signature of the data erasure program.

Next, the embedded controller 31a transmits the server public key information to the BIOS processing unit 101a (step S205). The embedded controller 31a transmits, to the BIOS processing unit 101a, the server public key stored in the key information storage unit 311 as the server public key information.

Next, the BIOS processing unit 101a verifies the electronic signature of the data erasure program by the server public key (step S206). For example, when receiving the data erasure program and the electronic signature, the installation processing unit 112 generates a hash value of the data erasure program using the hash function. Further, the installation processing unit 112 executes a decryption process in public-key cryptography to decrypt the received electronic signature by the server public key in order to generate a decrypted value (hash value) of the electronic signature. The installation processing unit 112 checks the validity of the data erasure program depending on whether or not the generated hash value of the data erasure program matches the decrypted value (hash value) of the electronic signature.

Next, the installation processing unit 112 determines whether or not the data erasure program is valid (step S207). When the generated hash value of the data erasure program matches the decrypted value (hash value) of the electronic signature, the installation processing unit 112 determines that the data erasure program is valid (step S207: YES), and advances the processing to step S208. On the other hand, when determining that the data erasure program is not valid (step S207: NO), the installation processing unit 112 advances the processing to step S210 to execute the abnormal termination process including the destruction of the server public key.

Since the subsequent processes from step S208 to step S215 are the same as the processes from step S106 to step S113 illustrated in FIG. 7, the description thereof is omitted here.

Next, in step S216, the embedded controller 31a transmits the erase command and the electronic signature to the BIOS processing unit 101a. Thus, the data erasure processing unit 113 of the BIOS processing unit 101a receives the erase command and the electronic signature.

Next, the BIOS processing unit 101a transmits, to the embedded controller 31a, a request for sending server public key information (step S217). The data erasure processing unit 113 requests the server public key information from the embedded controller 31a to verify the electronic signature of the data erasure program.

Next, the embedded controller 31a transmits the server public key information to the BIOS processing unit 101a (step S218). The embedded controller 31a transmits, to the BIOS processing unit 101a, the server public key stored in the key information storage unit 311 as the server public key information.

Next, the BIOS processing unit 101a verifies the electronic signature of the erase command by the server public key (step S219). For example, when receiving the erase command and the electronic signature, the data erasure processing unit 113 generates a hash value of the erase command using the hash function. Further, the data erasure processing unit 113 executes a decryption process in public-key cryptography to decrypt the received electronic signature by the server public key in order to generate a decrypted value (hash value) of the electronic signature. The data erasure processing unit 113 checks the validity of the erase command depending on whether or not the generated hash value of the erase command matches the decrypted value (hash value) of the electronic signature.

Next, the data erasure processing unit 113 determines whether or not the erase command is valid (step S220). When the generated hash value of the erase command matches the decrypted value (hash value) of the electronic signature, the data erasure processing unit 113 determines that the erase command is valid (step S220: YES), and advances the processing to step S221. On the other hand, when determining that the erase command is not valid (step S220: NO), the data erasure processing unit 113 advances the processing to step S223 to execute the abnormal termination process including the destruction of the server public key.

Since the subsequent processes from step S221 to step S225 are the same as the processes from step S117 to step S121 illustrated in FIG. 7, the description thereof is omitted here.

Next, in step S226, the embedded controller 31a generates an electronic signature of the data erasure result by the PC private key. For example, the embedded controller 31a generates a hash value of the acquired data erasure result using the hash function, and executes an encryption process in public-key cryptography to encrypt the generated hash value by the PC private key stored in the key information storage unit 311 in order to generate an electronic signature of the data erasure result.

Next, the embedded controller 31a transmits the electronic signature to the BIOS processing unit 101a (step S227).

Next, the erasure result transmission processing unit 114 of the BIOS processing unit 101a transmits the data erasure result and the electronic signature to the embedded controller 31a (step S228), and the embedded controller 31a transmits the data erasure result and the electronic signature to the management server 5 (step S229). The embedded controller 31a adds the electronic signature to the data erasure result and transmits the data erasure result to the management server 5 through the NW communication unit 230.

Since the subsequent processes from step S230 to step S233 are the same as the processes from step S124 to step S127 illustrated in FIG. 7, the description thereof is omitted here.

Note that, in FIG. 10 and FIG. 11, the processes of step S201 and step S202 correspond to the first transmission step, and the processes of step S214 and step S215 correspond to the second transmission step. Further, the processes from step S226 to step S229 correspond to the third transmission step.

Further, the processes from step S204 to step S208 (or to step S209) correspond to the installation step, and the processes from step S217 to step S221 (or to step S222) correspond to the data erasure step. Further, the processes from step S230 to step S232 correspond to the result storage step.

As described above, the data erasure method and the information processing system 100a according to the present embodiment are such that the BIOS processing unit 101a of the laptop PC1a (information processing apparatus) includes the installation processing unit 112, the data erasure processing unit 113, and the erasure result transmission processing unit 114 instead of the embedded controller 31a.

Thus, the data erasure method and the information processing system 100a according to the present embodiment have the same effect as those of the first embodiment described above, and data can be erased securely in erasing the data on the SSD 40 while guaranteeing reliability.

Note that the present invention is not limited to each of the embodiments mentioned above, and changes can be made without departing from the scope of the present invention.

For example, in each of the aforementioned embodiment, the example in which the information processing apparatus is the laptop personal computer (laptop PC1 (1a)) is described, but the present invention is not limited to this example, and the information processing apparatus may also be any other type of information processing apparatus such as a desktop personal computer or a tablet terminal.

Further, in each of the aforementioned embodiments, the example in which the memory drive device is the SSD 40 is described, but the present invention is not limited to this example, and the memory drive device may also be any other type of memory drive device such as a flash memory card. Further, in the aforementioned embodiments, the example in which the data erasure method is applied to the SSD 40 is described, but the data erasure method may also be applied to any other type of drive device such as an HDD (Hard Disk Drive).

Further, in each of the aforementioned embodiments, the example in which the validities of the data erasure program, the erase command, and the data erasure result are checked by using electronic signatures is described, but the present invention is not limited to this example, and the information processing system 100 (100a) may also check the validities using any other type of authentication information, signature information, or the like.

Further, the information processing system 100 (100a) may check the validities of the data erasure program, the erase command, and the data erasure result using encryption and decryption processes instead of the electronic signatures. Further, for example, the information processing system 100 (100a) may be such that a common key is exchanged between the management server 5 and the laptop PC1 (PC1a) using a Diffie-Hellman (DH) key exchange method or the like to check the validities of the data erasure program, the erase command, and the data erasure result using symmetric-key cryptography.

Note that each component included in the information processing system 100 (100a) described above has a computer system therein. Then, a program for implementing the functionality of each component included in the information processing system 100 (100a) described above may be recorded on a computer-readable recording medium so that the program recorded on this recording medium is read into the computer system and executed to perform processing in each component included in the information processing system 100 (100a) described above. Here, the fact that "the program recorded on the recording medium is read into the computer system and executed" includes installing the program on the computer system. It is assumed that the "computer system" here includes the OS and hardware such as peripheral devices and the like.

Further, the "computer system" may also include two or more computers connected through networks including the Internet, WAN, LAN, and a communication line such as a dedicated line. Further, the "computer-readable recording medium" means a portable medium such as a flexible disk, a magneto-optical disk, a flash ROM, or a CD-ROM, or a storage device such as a hard disk built in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be split into plural pieces, downloaded at different timings, respectively, and then united in each component included in the information processing system 100 (100a), or delivery servers for delivering respective split pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called a differential file (differential program) capable of implementing the above-described functions in combination with a program(s) already recorded in the computer system.

Further, some or all of the functions described above may be realized as an integrated circuit such as LSI (Large Scale Integration). Each function described above may be implemented by a processor individually, or some or all of the functions may be integrated as a processor. Further, the method of circuit integration is not limited to LSI, and may be realized by a dedicated circuit or a general-purpose processor. Further, if integrated circuit technology replacing the LSI appears with the progress of semiconductor technology, an integrated circuit according to the technology may be used.

### Description of Symbols

1, 1a laptop PC
5 management server
10, 10a main control unit
11 CPU
12 main memory
13 video subsystem
14 display unit
21 chipset
22 BIOS memory
23 WLAN card
31, 31a embedded controller (EC)
32 input unit
33 power supply circuit
40 SSD
41 flash memory chip
42 memory controller
51, 230 NW communication unit
52 server storage unit
53 server control unit
100, 100a information processing system
101, 101a BIOS processing unit
102 OS processing unit
311, 522 key information storage unit
312, 112 installation processing unit
313, 113 data erasure processing unit
314, 114 erasure result transmission processing unit
410 data storage unit
421 memory management unit
422 command processing unit
423 command program storage unit
521 apparatus information storage unit
523 erasure program storage unit
524 command storage unit
525 erasure result storage unit
531 erasure program transmission processing unit
532 command transmission processing unit
533 erasure result storage processing unit
NW1 network

## Claims

1. A data erasure method for an information processing apparatus equipped with a built-in memory drive device, the data erasure method comprising:
a first transmission step of causing a management server that manages the information processing apparatus to transmit a data erasure program for the memory drive device to the information processing apparatus using an encryption process by a first private key as a private key of the management server;
an installation step of causing the information processing apparatus to check validity of the data erasure program using a first public key as a public key of the management server, and to install the validated data erasure program on the memory drive device when the data erasure program is validated;
a second transmission step of causing the management server to transmit, to the information processing apparatus using cryptographic processing by the first private key, an erase command to cause a processor of the memory drive device to run the data erasure program; and
a data erasure step of causing the information processing apparatus to check the validity of the erase command using the first public key, and to transmit, to the memory drive device, the validated erase command when the erase command is validated in order to execute data erasure processing by the data erasure program.

2. The data erasure method according to claim 1, further comprising:
a third transmission step of causing the information processing apparatus to transmit a data erasure result as a result of the data erasure processing to the management server using cryptographic processing by a second private key as a private key of the information processing apparatus; and
a result storage step of causing the management server to check the validity of the data erasure result using a second public key as a public key of the information processing apparatus, and to store, in an erasure result storage unit, the validated data erasure result when the data erasure result is validated.

3. The data erasure method according to claim 2,
wherein
the information processing apparatus includes a sub control unit capable of operating independently of a main control unit which executes processing based on an OS (Operating System) and a BIOS (Basic Input Output System) and having a security area as a secure area directly inaccessible from outside to store at least the first public key and the second private key, and
in the installation step and the data erasure step, the sub control unit checks validities of the data erasure program and the erase command, and the data erasure program and the erase command are transmitted to the memory drive device through the sub control unit and the BIOS.

4. The data erasure method according to claim 3, wherein, in the third transmission step, the sub control unit transmits the data erasure result to the management server using cryptographic processing by the second private key.

5. The data erasure method according to any one of claims 2 to 4, wherein
in the first transmission step and the second transmission step, the management server generates signature information for transmission data using cryptographic processing by the first private key, adds the signature information to the transmission data for which the signature information is generated, and transmits the transmission data to the information processing apparatus,
in the installation step and the data erasure step, the information processing apparatus checks the validities of the data erasure program and the erase command based on the signature information and the first public key,
in the third transmission step, the information processing apparatus generates signature information on the data erasure result using cryptographic processing by the second private key, adds the signature information to the data erasure result, and transmits the data erasure result to the management server, and
in the result storage step, the management server checks the validity of the data erasure result based on the signature information on the data erasure result and the second public key.

6. The data erasure method according to any one of claims 1 to 4, wherein the memory drive device is an SSD (Solid State Drive).

7. An information processing system comprising
an information processing apparatus equipped with a built-in memory drive device, and a management server that manages the information processing apparatus, wherein
the management server executes:
first transmission processing to transmit a data erasure program for the memory drive device to the information processing apparatus using cryptographic processing by a first private key as a private key of the management server; and
second transmission processing to transmit, to the information processing apparatus using cryptographic processing by the first private key, an erase command to cause a processor of the memory drive device to run the data erasure program, and
the information processing apparatus executes:
installation processing to check validity of the data erasure program using a first public key as a public key of the management server, and to install the validated data erasure program on the memory drive device when the data erasure program is validated; and
data erasure processing to check the validity of the erase command using the first public key, and to transmit, to the memory drive device, the validated erase command when the erase command is validated in order to execute the data erasure processing by the data erasure program.

8. An information processing apparatus in an information processing system including the information processing apparatus equipped with a built-in memory drive device, and a management server that manages the information processing apparatus, the information processing apparatus comprising:
an installation processing unit which acquires a data erasure program for the memory drive device transmitted by the management server using cryptographic processing by a first private key as a private key of the management server, checks validity of the data erasure program using a first public key as a public key of the management server, and installs the validated data erasure program on the memory drive device when the data erasure program is validated; and
a data erasure processing unit which acquires an erase command transmitted by the management server using cryptographic processing by the first private key to cause a processor of the memory drive device to run the data erasure program, checks validity of the erase command using the first public key, and transmits the validated erase command to the memory drive device when the erase command is validated to execute data erasure processing by the data erasure program.

9. An information processing apparatus for erasing data and equipped with a built-in memory drive device, the information processing apparatus comprising:
a first transmission unit arranged to cause a management server that manages the information processing apparatus to transmit a data erasure program for the memory drive device to the information processing apparatus using an encryption process by a first private key as a private key of the management server;
an installation unit arranged to cause the information processing apparatus to check validity of the data erasure program using a first public key as a public key of the management server, and to install the validated data erasure program on the memory drive device when the data erasure program is validated;
a second transmission unit arranged to cause the management server to transmit, to the information processing apparatus using cryptographic processing by the first private key, an erase command to cause a processor of the memory drive device to run the data erasure program; and
a data erasure unit arranged to cause the information processing apparatus to check the validity of the erase command using the first public key, and to transmit, to the memory drive device, the validated erase command when the erase command is validated in order to execute data erasure processing by the data erasure program.

10. The information processing apparatus according to claim 9, further comprising:
a third transmission unit arranged to cause the information processing apparatus to transmit a data erasure result as a result of the data erasure processing to the management server using cryptographic processing by a second private key as a private key of the information processing apparatus; and
a result storage unit arranged to cause the management server to check the validity of the data erasure result using a second public key as a public key of the information processing apparatus, and to store, in an erasure result storage unit, the validated data erasure result when the data erasure result is validated.

11. The information processing apparatus according to claim 10, wherein
the information processing apparatus includes a sub control unit capable of operating independently of a main control unit which executes processing based on an OS (Operating System) and a BIOS (Basic Input Output System) and having a security area as a secure area directly inaccessible from outside to store at least the first public key and the second private key, and
the sub control unit checks validities of the data erasure program and the erase command, and the data erasure program and the erase command are transmitted to the memory drive device through the sub control unit and the BIOS.

12. The information processing apparatus according to claim 11, wherein the sub control unit transmits the data erasure result to the management server using cryptographic processing by the second private key.

13. The information processing apparatus according to any one of claims 10 to 12, wherein
the management server generates signature information for transmission data using cryptographic processing by the first private key, adds the signature information to the transmission data for which the signature information is generated, and transmits the transmission data to the information processing apparatus,
the information processing apparatus is further arranged to check the validity of the data erasure program and the erase command based on the signature information and the first public key,
the information processing apparatus is further arranged to generate signature information on the data erasure result using cryptographic processing by the second private key, adds the signature information to the data erasure result, and transmit the data erasure result to the management server, and
the management server is further arranged to check the validity of the data erasure result based on the signature information on the data erasure result and the second public key.

14. The information processing apparatus according to any one of claims 9 to 12, wherein the memory drive device is an SSD (Solid State Drive).
